# Europäisches Patentamt

## European Patent Office

## Office européen des brevets

(11) Publication number: **0 055 741**
**B1**

(12) **EUROPEAN PATENT SPECIFICATION**

(45) Date of publication of patent specification: **18.01.89**

(51) Int. Cl.⁴: **G 06 F 13/00**

(21) Application number: **81901997.7**

(22) Date of filing: **02.07.81**

(86) International application number:
**PCT/US81/00902**

(87) International publication number:
**WO 82/00373 04.02.82 Gazette 82/04**

(54) **INPUT/OUTPUT SYSTEM AND METHOD OF COMMUNICATION FOR PERIPHERAL DEVICES IN DATA PROCESSING SYSTEM.**

(30) Priority: **11.07.80 US 168897**

(43) Date of publication of application:
**14.07.82 Bulletin 82/28**

(45) Publication of the grant of the patent:
**18.01.89 Bulletin 89/03**

(84) Designated Contracting States:
**AT CH DE FR GB LI NL**

(56) References cited:
US-A-3 297 994
US-A-3 512 133
US-A-3 648 252
US-A-4 016 548
US-A-4 060 849
US-A-4 079 452
US-A-4 110 830
US-A-4 200 930
US-A-4 254 462
IBM TECHNICAL DISCLOSURE BULLETIN, vol. 17, no. 11, April 1975, pages 3272-3273, New York, US; J.J. DUVALSAINT et al.: "Remote station controller"

(73) Proprietor: **NCR Corporation**
**World Headquarters**
**Dayton, Ohio 45479 (US)**

(72) Inventor: **CHARI, Venu**
**8633 Ara Place**
**San Diego, CA 92126 (US)**
Inventor: **COSTA, John Louis**
**2369 North Iris Lane**
**Escondido, CA 92026 (US)**

(74) Representative: **Robinson, Robert George**
**International Patent Department NCR Limited**
**206 Marylebone Road**
**London NW1 6LY (GB)**

(56) References cited:
IBM Technical Disclosure Bulletin, Vol. 21, No. 7, Dec. 1978, pp. 2633-2645, D.M. Nagel et al.: "Programmable Communications Subsystem having Controller incorporating Microprocessor"

Courier Press, Leamington Spa, England.

## Description

Technical field

This invention relates to an input/output system and method of communication for peripheral devices in a data processing system.

This application is related to an international application filed by the present Applicants on the same day as the present application entitled "Input/Output Processor and Method of Communication for Data Processing System"; cf. WO 82/00374 (EP—A—81902109.8).

Background art

Where it is desired to connect a multiplicity of peripheral devices in a data processing system, as for example a multi-user system, various techniques such as polling, interrupts, direct memory access and message switching (see "Instruction to Operating System Design", A. N. Habermann—SRA-1976) have been employed in an effort to provide an efficient means of communication between the peripheral devices and the main memory and central processor.

U.S. Patent 4,079,452 discloses a means of coupling a large number of peripheral devices having various communications protocols to a data processor, comprising connecting groups of peripheral devices to respective interface adapters, and connecting the interface adapters in parallel to a programmer controller module, the controller module being coupled via a direct memory access module to a data processor. The controller module includes a special purpose computer having a program of subroutines for implementing the specific communications protocols.

The problem with such a means of communication is that it is not sufficiently flexible nor of sufficient capacity to handle the high data flow requirements of a large and fast main frame data processing system which may have among other features several central processor elements.

From US—A—4200930 there is known a data processing system having a plurality of processing elements, a central memory coupled to said processing elements, and an I/O processor coupled to the central memory, the I/O processor having a plurality of channel ports for communicating information to a plurality of peripheral subsystems, and each peripheral subsystem including a peripheral adapter interfacing with a plurality of peripheral devices.

From IBM Technical Disclosure Bulletin, Volume 21, No. 7, December 1978, pages 2633—2645, there is known a data processing system having a processing element, a central memory coupled to the processing element, and an I/O processor coupled to the central memory, the I/O processor having a plurality of scanner lines and a controller incorporating a microprocessor. The system also includes an interrupting resource for interrupt preparation of the I/O processor.

From US—A—4016548 there is known a communications multiplier module which assembles serial-by-bit data from a plurality of input ports into parallel-by-bit characters before transmitting them to a host computer.

Disclosure of the invention

It is an object of the invention to provide a means of communicating between a multiplicity of peripheral devices and a data processing system, said means having a flexibility which enables said means to be capable of efficient operation under high rates of data flow.

According to the invention there is provided a data processing system having at least one processing element, a central memory coupled to said processing element, and an I/O processor coupled to said central memory, and wherein said I/O processor has channel port means for providing transmission paths for communicating information to a plurality n of peripheral subsystems and wherein each of said peripheral subsystems has included a peripheral adapter interfacing with a plurality of peripheral devices, characterized in that said I/O processor has a plurality m of serial channel control processors, where n is greater than m, and dynamic channel exchange means which includes a plurality n of bit serial channel ports for providing a transmission path in a bit serial link format to each of said peripheral subsystems and which allows a said serial channel control processor to communicate with any one of the peripheral adapters, and in that each said peripheral adapter comprises first means having an input adapted to receive information from said I/O processor and having an output adapted to transmit information to said I/O processor, for performing a serial-to-parallel or parallel-to-serial transformation on the information from said I/O processor or to said I/O processor, respectively, second means, having a plurality of input-output terminals adapted to interface with said peripheral devices, for providing peripheral controller logic functions for controlling said peripheral devices, and for the transfer of information with said peripheral devices, and third means, operatively connected to said first means and to said second means, for generating response transmission to said I/O processor in accordance with a defined message protocol, in conjunction with controlling the transfer of information between said first means and said second means.

By providing a data system in accordance with the present invention wherein data communications between the peripheral devices and the I/O processor are carried out in accordance with a message protocol by means of a peripheral adapter, there can be achieved a speedy and efficient method of communication which can deal with high transmission rates.

Brief description of the drawings

One embodiment of the invention will now be described by way of example with reference to the accompanying drawings, in which:

Fig. 1 is a block diagram of a data processing system having a preferred structure;

Fig. 2 depicts the format of the central memory I/O tast structure;

Fig. 3 is a block diagram showing the switchable data paths through a dynamic channel exchange;

Fig. 4 is a block diagram of the peripheral adapter according to the invention;

Fig. 5 is a block diagram of the message protocol module of the peripheral adapter;

Figs. 6A and 6B are a flowchart illustrating the operation of the system;

Fig. 6C shows the relationship of Figs. 6A and 6B;

Fig. 7 depicts a typical message sequence;

Fig. 8 shows the message formats;

Fig. 9 shows the command messages in a typical data output sequence;

Fig. 10 shows the command messages in a typical data input sequence; and

Fig. 11A through 11E is a flow diagram of the microinstruction sequences of the message protocol module.

Best mode for carrying out the invention

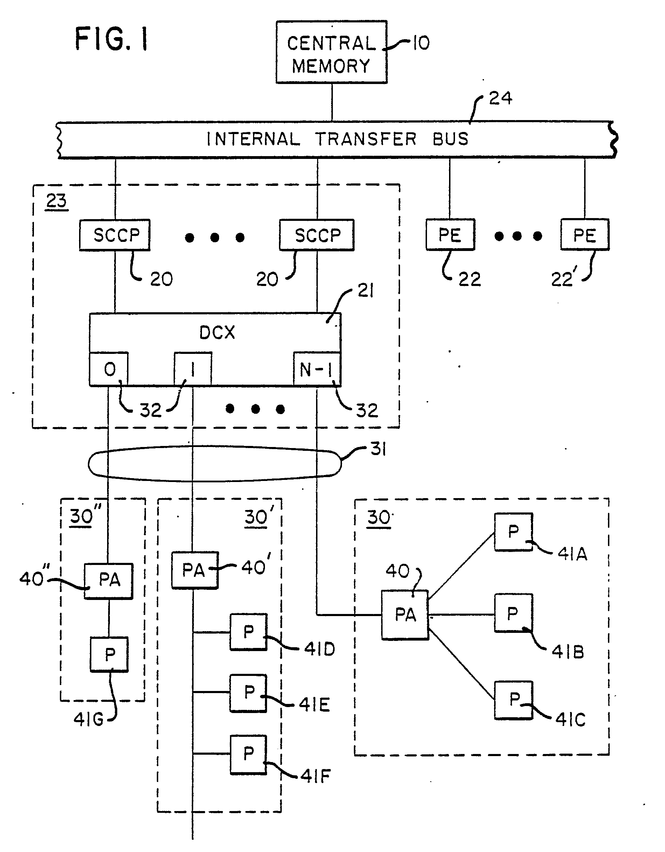

Referring to Fig. 1, the data processing system includes an Input/Output Subsystem (IOSS)1. The IOSS architecture 1 comprises the I/O Task Structure (IOTS) shown as the central memory 10, the serial channel control processors (SCCPs) 20, the dynamic channel exchange (DCX) 21, and includes the peripheral subsystems 30, 30′, 30″, which further include the peripheral adapters (PA) 40, 40′, 40″ and the associated peripheral devices 41A—41G. In a data processing system, at least one processing element, 22, 22′ is coupled to the central memory 10. The SCCPs 20 and the DCX 21 together form what is more generally known as an I/O processor 23, the I/O processor being coupled to the central memory 10. The coupling of the IOSS elements is shown in Fig. 1 utilizing an internal transfer bus 24, although it will be understood by those skilled in the art that any standard coupling means may be used. The DCX 21 interfaces with the peripheral subsystems 30 utilizing bit serial channels 32 connected to peripheral adapters 40 by bit serial lines 31.

The message protocol module is an element of a peripheral adapter 40. A message protocol is defined for the transmission of information between the processing element 22 and the peripheral devices 41A—41G. The message protocol module is implemented to generate the control signal sequences required to effect the peripheral device information transfer in accordance with the defined protocol. The implementation is achieved by the use of a ROM and associated control logic within a peripheral adapter 40 and will be described hereinafter.

The serial channel control processors 20 form part of the I/O processor 23. The SCCPs 20 form the overall I/O controller of the data processing system and interface with the peripheral adapters 40 for peripheral device information transfer, the SCCPs 20 performing the various control, transmission initiation, and termination functions in accordance with the defined protocol. The SCCP functions are implemented in the SCCP 20 utilizing a ROM and associated control logic, which is more fully described in the aforementioned copending application.

A. IOSS system overview

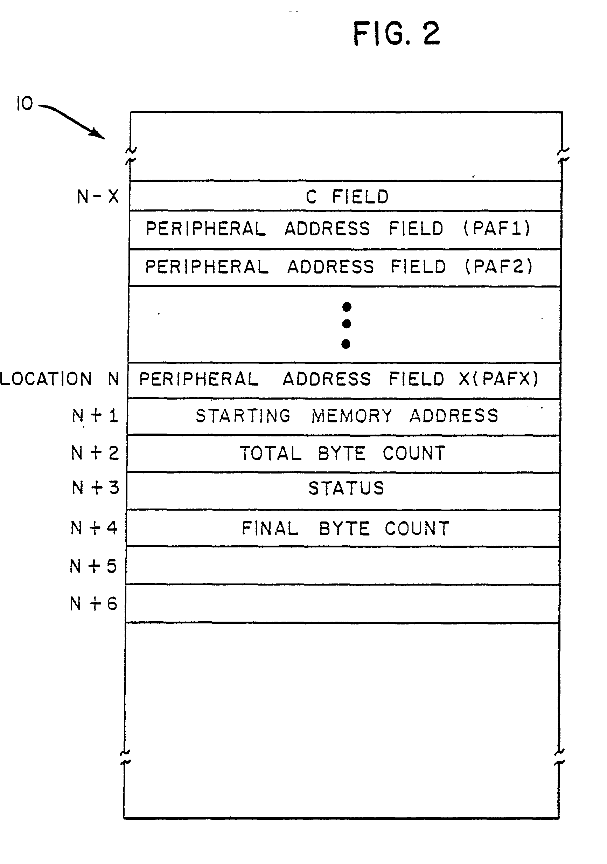

Before describing the overall IOSS sysmem operation, it will be advantageous to give a brief description of the individual elements of the IOSS system. Referring to Fig. 2, the I/O task structure (IOTS) of central memory 10 is a memory resident set of tables and lists, denoted herein as I/O Field (IOF), that permit communication between the I/O software of the processing element or elements 22, 22′ and the serial channel control processors 20. The tables and lists of the IOTS of central memory 10 make up the control information utilized by SCCPs 20. The Peripheral Address Fields (PAFs) indicate the specific peripheral to be addressed, and the function to be performed; the number of PAF bytes of the preferred embodiment can be as many as twelve depending on the peripheral subsystems 30. The Starting Memory Address specifies the central memory 10 starting location of the data to be transmitted or received, the Total Byte Count indicates the number of words to be transmitted or received, and the Final Byte Count indicates the number of bytes transmitted at the end of a transfer sequence. The C field is utilized to check that an SCCP is communicating with the correct peripheral. The Status word is utilized to indicate the current state of the communication.

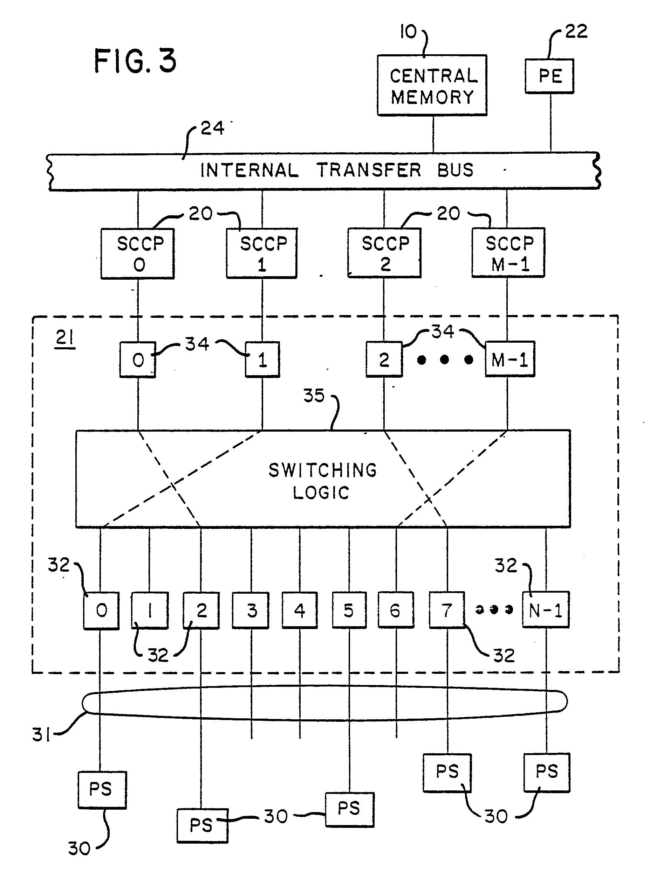

Referring to Fig. 3, the DCX 21 is shown interfacing with SCCPs 20 through standard interface SCCP ports 34, and interfacing the peripheral subsystems 30 through bit serial channels 32 via bit serial lines 31. There are m-SCCP ports 34 and n-bit serial channels (BSC) 32, with the number m being less than the number n. In the preferred embodiment, m is four and n is eight, expandable up to 8 and 32 respectively. The SCCP ports 34 and the bit serial channels 32 each connect to the switching logic 35. The switching logic 35 thereby allows an SCCP 20 to communicate with any peripheral adapter 40 by providing a data path between the SCCP 20 and the desired peripheral adapter 40.

A peripheral subsystem 30 includes a peripheral adapter 40 and at least one peripheral device 41. Each peripheral adapter 40 of the IOSS performs the controller function for the associated peripheral device(s) 41 exchanging the control messages and data with an SCCP 20 in accordance with the defined message protocol. The message exchanges of a peripheral adapter 40 are implemented by the use of a ROM and associated control logic which is more fully described hereinunder.

The serial channel control processors 20 are small device-independent processors used to control the input and output of data between a processing element 22 and the peripheral subsystems 30. Still referring to Fig. 3, the SCCPs 20 communicate with the I/O software of the processing element 22 via the I/O task structure of central memory 10 and the internal transfer bus 24. Each SCCP 20 occupies one bus position on the internal transfer bus 24 and is connected to an associated SCCP port 34 of the DCX 21. An SCCP 20 can request communication to any bit serial channel 32 through switching logic 35 of DCX 21, but the requesting SCCP 20 may connect to and control only one BSC 32 at a time. Thus, the services between all the BSCs 32 are time shared, thereby permitting an SCCP 20 to control the I/O transfer between a processing element 22 and a peripheral subsystem 30. The control functions of the SCCPs 20 are described in detail in the aforementioned co-pending application.

Data transmission is via bit serial channels 32 at a fixed transmission speed, the transmission speed utilized in the preferred embodiment being sixteen megabits per second (two megabytes per second). Transmission between the SCCPs 20 and the peripheral adapters 40, via the DCX 21, is independent of the transfer rate of the peripheral subsystems 30 or of the central memory 10. The SCCPs 20 and the peripheral adapters 40 of peripheral subsystems 30 contain buffers to facilitate this isolation. Communications over the BSC lines 31 is message oriented, so as to comply with a defined message protocol and a defined transmission protocol. In the preferred embodiment, up to 256, 8-bit bytes of data can be transferred in one direction as a block. BSC 32 connections are ordinarily maintained between SCCPs 20/DCX 21 as long as information transfer is occurring. By polling the BSCs 32 when no I/O transmissions are taking place, the SCCPs 20/DCX 21 are available to serve a waiting peripheral subsystem 30. In this way maximum bit serial channel 32 utilization is achieved and as multiple SCCPs 20 are available, load sharing is accomplished. The SCCPs 20/DCX 21 are peripheral independent and therefore can serve any peripheral subsystem 30. I/O system bandwidth can be increased by adding additional SCCPs 20.

B. Peripheral adapter hardware description

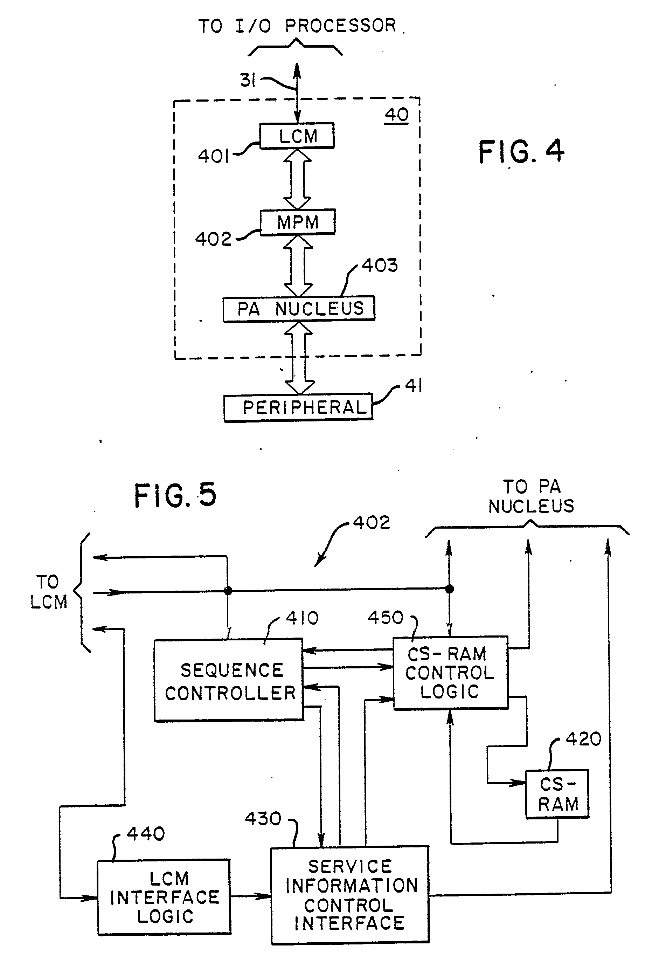

Referring to Fig. 4, a block diagram of a peripheral adapter 40 is shown comprising a link control module (LCM) 401, coupled to the message control module (MPM) 402, which in turn is coupled to the peripheral adapter (PA) nucleus 403. The LCM 401 interfaces with the I/O processor 23 via a bit serial line 31 and performs the bit-to-byte or byte-to-bit translation. The PA nucleus 403 interfaces with a peripheral device 41 and comprises a data buffer and the logic for controlling the functions of the peripheral device 41. Peripheral controller logic functions are well known by those skilled in the art; hence, the functions are not discussed herein. The data buffer of PA nucleus 403 provides for isolating the peripheral device transfer rate from the BSC 32 transfer rate. The message protocol module 402 generates and receives control signals to and from the PA nucleus 403 for controlling the I/O

with a processing element 22, the control being administered by interfacing with an SCCP 20 in accordance with the defined message protocol.

Referring to Fig. 5, a block diagram of the MPM 402 is shown.

A sequence controller 410 provides the overall control of MPM 402. The sequence controller 410 comprises, in part, a ROM, a ROM sequencer, and a state register, not shown. The ROM sequencer causes the micro-instructions of the ROM to be executed, the execution of the microinstructions generating the control signals such that the MPM 402 can perform a defined operation. The ROM is configured such that the microinstruction words perform the defined operations upon execution, the defined operations being responses to an SCCP 20 in accordance with the defined message protocol which will be described hereinunder. The ROM sequencer is well known by those skilled in the art and will not be discussed further here. Sequence controller 410 interfaces with the LCM 401 for receiving a message control byte. Logic within the sequence controller 410 operates to initiate a branch to the appropriate routine stored within the ROM, based on the configuration of the state register and the message control byte of the message receive. Command and results inputs which are transferred between a CS-RAM 420 and central memory 10, are controlled by the sequence controller 410. Data transfers between the PA nucleus 403 and central memory 10 are also controlled by the sequence controller 410.

The Service Information Control Interface (SICI) 430 provides the interface control to the PA nucleus 403. The SICI also provides sequencer controller 410 timing and CS-RAM 420 timing. SICI 430 also interfaces with LCM Interface Logic 440 for transferring various control signals between the LCM 401 and the PA nucleus 403. A PA nucleus service request signal received from the PA nucleus 403 is transferred to the LCM 401 via LCM Interface Logic 440 causing the LCM 401 to transmit a Service Needed signal to an SCCP 20 which will be discussed in detail hereinunder. The SICI 430 also provides data read and write signals to the PA nucleus 403 for reading from or writing into the PA nucleus data buffer. An interrupt to the PA nucleus 403 is also provided to indicate a transmission sequence, which was prompted by the PA nucleus 403, is properly completed. A transmission sequence includes the transfer of data or the transfer of status, and will be described in detail hereinunder.

The command Status RAM (CS-RAM) 420 is a read-write scratchpad memory for providing temporary storage. Information required by a PA 40 to communicate with an SCCP 20 in accordance with the defined message protocol is stored in CS-RAM 420. The CS-RAM 420 serves as an information exchange point between the sequence controller 410 and the PA nucleus 403. The CS-RAM 420 is organized to store the command and control information, including the PAFs, received from an SCCP 20. The CS-RAM stores peripheral service type information received from PA nucleus 403, including a data output ready indication, data input ready indication, results input ready indication, and information to be contained in the service setup information field of the literal appended message discussed hereinunder. The CS-RAM also stores the peripheral status information received from PA nucleus 403, including peripheral ready, peripheral busy, or peripheral absent indications.

The CS-RAM Control Logic 450 provides the administering and multiplexing of CS-RAM address and data between the sequence controller 410 and the PA nucleus 403. Access to the CS-RAM 420 is divided equally between the sequence controller 410 and the PA nucleus 403 by a timing control signal. When the timing control signal is in a first state, the sequence controller can read or write data in the CS—RAM 420. When the timing control signal is in a second state, the PA nucleus 403 can read or write data in the CS-RAM 420. Separate CS-RAM address counters and data registers are provided for the sequence controller 410 and the PA nucleus 403 so that continuity of address and data is maintained for both elements with the multiplexing scheme.

The LCM interface logic 440 contains the logic for providing the handshake control to pass serial bytes between LCM 401 and MPM 402 and between LCM 401 and the data buffer of the PA nucleus 403. An End of Message signal from the LCM 401 is a control signal inputted to the MPM 402 via the LCM interface logic 410 indicating the termination of a transmission sequence from an SCCP 20.

C. IOSS systems operation

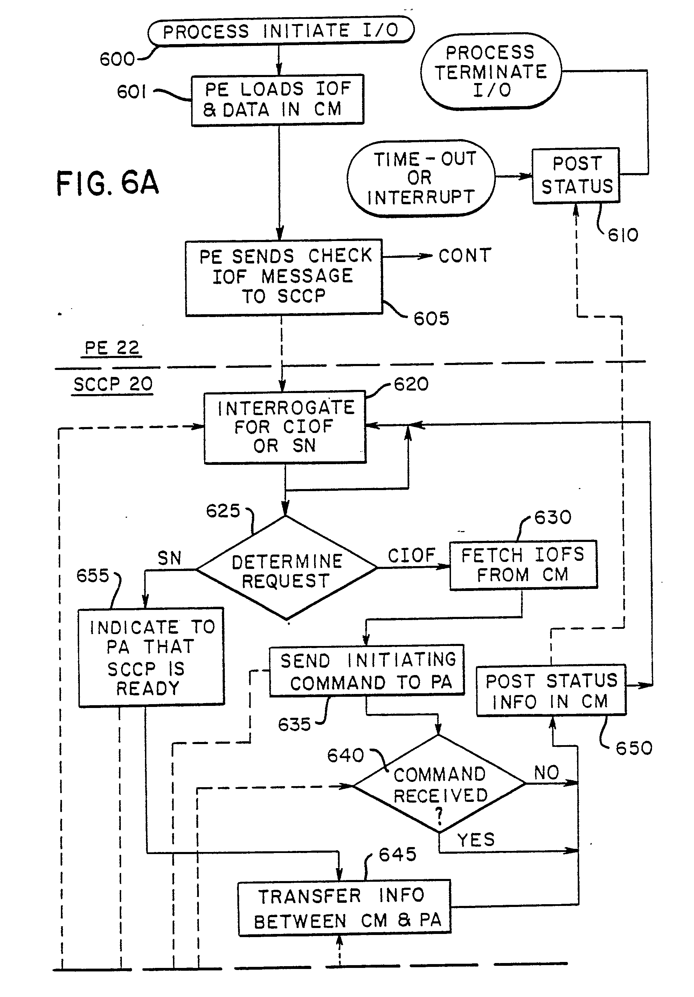

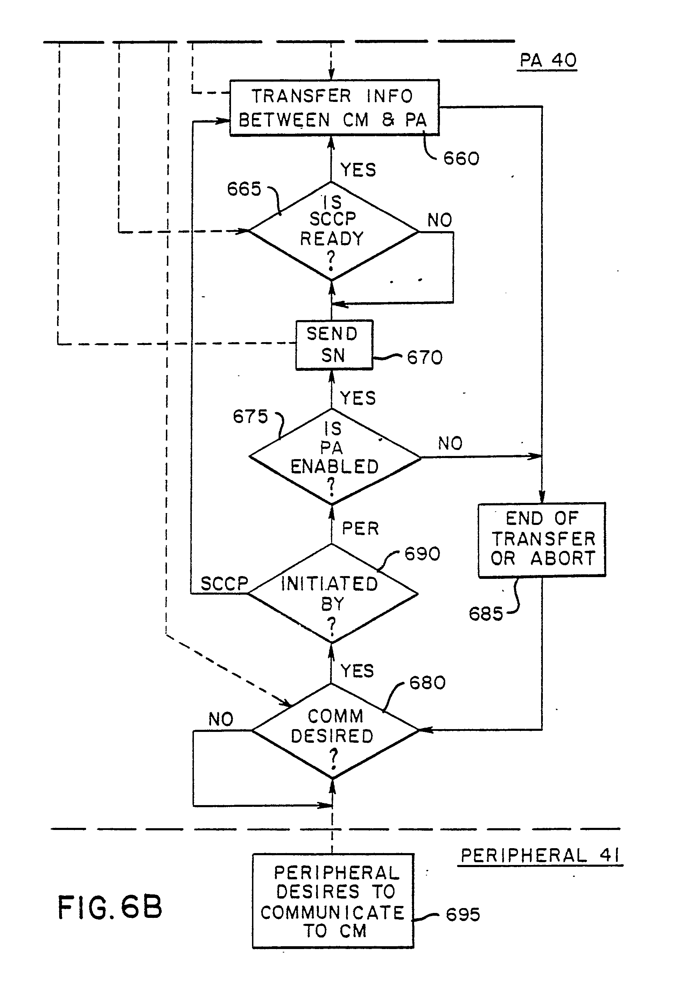

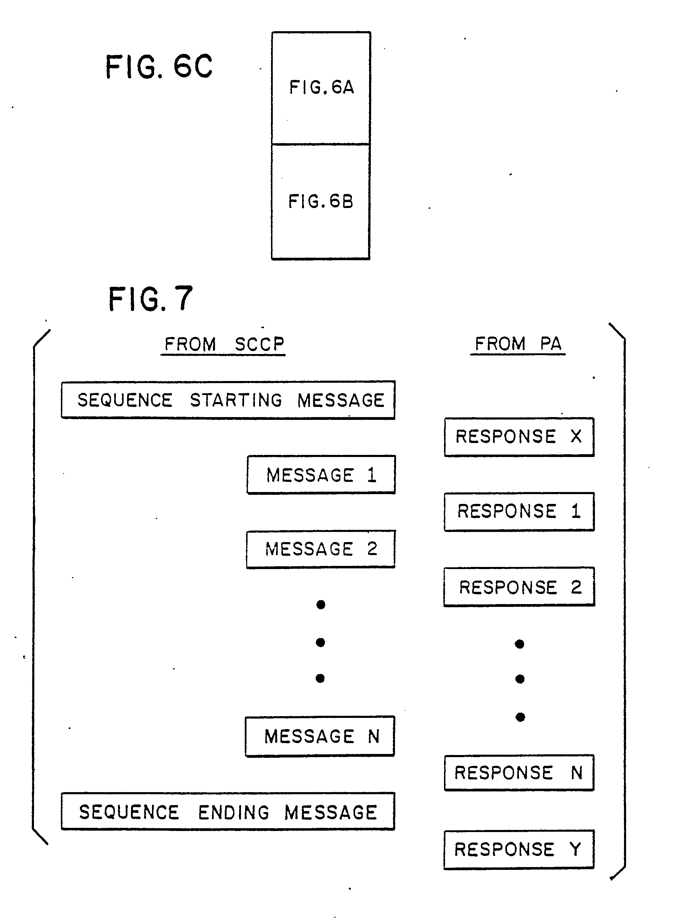

The systems operation will now be described with the aid of the flowcharts of Figs. 6A and 6B taken together as shown by Fig. 6C. Figs. 6A and 6B show a generalized function flow of the operations performed by the individual elements, namely a processing element 22, an SCCP 20, a peripheral adapter 40, and a peripheral device 41, in the overall I/O operation, the dotted lines indicating "control type" information transferred between elements.

When a processor element 22 desires to communicate to a peripheral 41, the Process Initiate I/O routine (block 600) of the I/O software of the processor element 22 is executed which creates the I/O fields (IOF) and places these fields within the I/O task structure of central memory 10 (block 601), the I/O task structure being an area of central memory 10 allocated for storing the lists and tables utilized in performing the I/O function in accordance with the defined message protocol. After the IOFs and the data to be transferred to the peripheral 41 are stored within the proper locations of central memory 10, a message is sent to SCCP 20 (block 605) which indicates a check of the IOF of central memory 10 is to be performed (dotted line from block 605), the PE 22 continuing to execute its assigned task. The processor element 22 plays no further role in the transfer of information between central memory 10 and the relevant peripheral adapter 40. The I/O software of PE 22 reads the status word of the I/O task structure when the data transfer is complete (block 610), the I/O completion indicated to the I/O software via a message from the SCCP 20 or the I/O software times out the I/O if no termination has occurred. If the status signifies that the data transfer is completed, the next data transfer with that peripheral can be set up and initiated. If the status indicates an incomplete or a busy, a retry may be attempted or some other appropriate action may be taken by the I/O software.

When no I/O transmission are taking place, an SCCP 20 is an interrogation loop (block 620) testing for a Check IOF (CIOF) message from PE 20 (dotted line from block 605) or a Service Needed (SN) message (dotted line from block 670). When an input is received, the SCCP determines the specific request (block 625). (Assume for the present that a "Check IOF" message was received from PE 20). When a check IOF message is received by the SCCP 20, the IOFs are read from central memory 10 (block 630). (The data contained in the IOFs is used by SCCP 20 to instruct the DCX 21 to connect the appropriate BSC 32). The SCCP 20 then passes initiating command (or enabling) information (block 635) to the peripheral adapter 40 (dotted line from block 635) in accordance with the defined message protocol which is described in detail hereinunder. The peripheral adapter 40 responds to the SCCP 20 that the initiating command was received (dotted line from block 660). The SCCP 20 waits a specified amount of time for the response from the peripheral adapter 40 that the initiating (or enabling) command was received (block 640). The initial command transfer performed between CM 10 and PA 40 includes the transfer of command information (i.e., the command appended message exchange to be described in detail hereinunder) required by the PA 40 to properly communicate with any SCCP 20 which might subsequently service the PA 40 to handle the actual data exchange message sequence. When the initial transfer sequence is complete, the SCCP 20 disconnects from the PA 40, status information is stored in central memory 10 (block 650) and the SCCP 20 returns to interrogating loop (block 620). If the peripheral adapter 40 is busy or does not respond, the SCCP 20 stores the busy status in the appropriate location of the IOF and the transmission is terminated (block 650). The SCCP 20 then returns to the interrogating loop (block 620). After the initial transfer sequence, the SCCP 20 responds to the service needed indication. For output transfers (from the PE 22) initiated by the PE 22, the peripheral adapter 40 sends service needed after the peripheral device 41 has completed the command operation (e.g., slewing or skipping) specified in the initial transfer sequence.

When the peripheral device 41 desires to communicate to the central memory 10, the peripheral indicates this by informing the peripheral adapter (dotted line from block 695) which may be by an interrupt, a signal line, etc., the indication being a function of the peripheral 41.

When no I/O transmissions are taking place, the peripheral adapter is essentially in an idle mode, depicted by block 680, as being in a loop awaiting a transmission initiation request. When the transmission initiation request is received the peripheral adapter 40 determines the request is from the peripheral device (PER) (block 690), and if the peripheral adapter had been previously enabled (block 675), a Service Needed message is sent (block 670) to a BSC 32 of DCX 21. During quiescent periods, the SCCPs 20 poll BSCs 32 for Service Needed. The first SCCP 20 to poll that BSC will service the peripheral adapter. In this manner the SCCP 20 receives the Service Needed message (dotted line from block 670). The SCCP 20 detects the Service Needed and indicates to the PA 40 that the SCCP 20 is ready (block 655), dotted line from (block 655) and proceeds to transfer information in accordance with the defined message protocol (block 645). Meanwhile, upon receipt that the SCCP 20 is ready (block 665) the PA 40 proceeds to its transfer counterpart (block 660) and begins the transfer of information between central memory 10 and the peripheral adapter 40 (block 660) in accordance with the defined message protocol. When the transfer is completed (block 685), the peripheral adapter 40 enters the idle state (block 680). When the transmission initiation request is from the SCCP 20, the peripheral adapter 40 makes that determination (block 690) and proceeds to transfer information in accordance with the defined message protocol (block 660). The SCCP initiated transmission request includes the enabling command which may not be followed by any subsequent information transfer from the SCCP 20. The peripheral adapter 40 then returns to the idle loop (block 680) in accordance with the defined message protocol.

### D. Protocol

A message protocol is defined for the orderly transfer of information between the SCCPs 20 and the peripheral adapters 40. An SCCP 20 can initiate an information transfer to a peripheral adapter 40 by issuing an appropriate control message. The message protocol, as defined, does not allow a peripheral adapter 40 to initiate an information transfer to the central system (i.e., to an SCCP 20). (A data processing system comprising the central memory 10, processing elements 22, and the I/O processor 23, is sometimes referred to herein as the central system). A peripheral adapter 40 must wait for a command from an SCCP 20 before it can transfer information. The information transfer is on a transmit-response basis. An SCCP 20 issues a message to a peripheral adapter 40 and waits for a response from the peripheral adapter 40 before issuing another message. A peripheral adapter 40 issues a message only in response to a received message. Recovery procedures are defined within the message protocol of the preferred embodiment to allow for the retransmission of any message found to be in error. Error sequences are not described herein. Many alternative approaches to error sequences, which include retry, recovery, etc., are well known and may be implemented by those skilled in the art without departing from the true spirit of the invention.

The defined message protocol is message oriented. The basic unit of information grouping is a message, the message being the vehicle for every command, every response, and all information that is transmitted. Referring to Fig. 7, a typical message sequence is depicted. A message sequence is initiated by an SCCP 20 by transmitting a sequence starting message to which the peripheral adapter 40 answers with response X, the response being a response message. Message 1 from SCCP 20 is followed by a Response 1 from peripheral adapter 40, the sequence of Message-Response continuing until all the data exchange has occurred. The SCCP 20 then terminates the transmission by initiating a Sequence Ending Message to which the peripheral adapter responds with response Y. A message sequence between an SCCP 20 and a peripheral adapter 40 comprises one or more exchanges, an exchange being defined as a message sent by the SCCP 20 and an appropriate response message returned by the peripheral adapter 40.

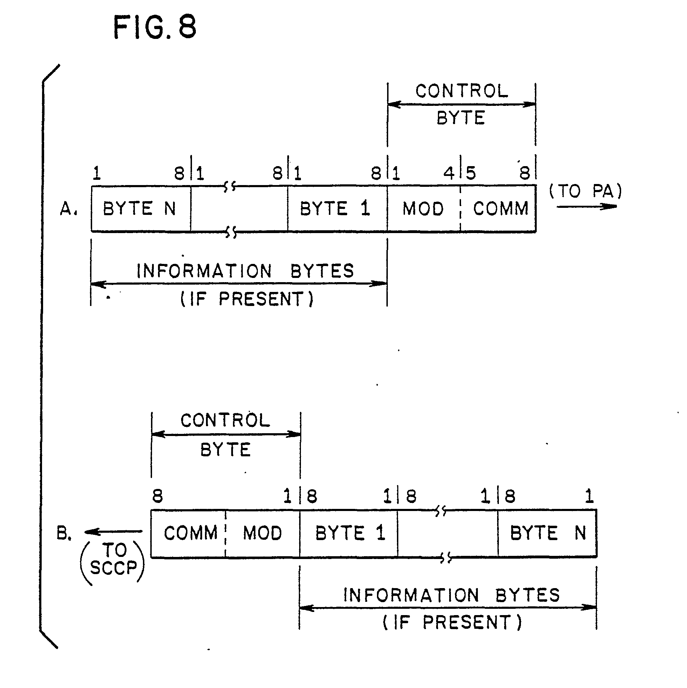

Referring to Fig. 8, the message formats can be seen. Fig. 8A shows the message format from an SCCP 20 to a PA 40, and Fig. 8B shows the message format from a PA 40 to an SCCP 20. Eight-bit bytes are shown with the arrowhead showing the direction of transmission, bit 8 of the control byte being the first bit transmitted. Each message contains a control byte for specifying the command and responses required to control the message transfer, bits 5—8 containing the command and bits 1—4 containing a modifier. A message may or may not contain information bytes, depending on the control byte. The number of information bytes present is variable and not fixed, up to a maximum number of 256 eight-bit bytes in a single message transmission. The defined message protocol calls for an SCCP 20 to issue I/O commands to the peripheral adapters 40, to poll peripheral adapters 40 for I/O data transfer servicing, to abort I/O operations in progress on the peripheral adapters 40 upon command from a processing element 22, and to abort information exchanges between the central system and the peripheral adapters 40 upon command from a processing element 22. In order to implement these I/O control functions, 4 basic initiation commands are defined. They are, command offer (CO), service offer (SO), abort order (AO), and reset (RS). During a message sequence, control byte commands issued by an SCCP 20 include, send information (SI), data appended (DA), command appended (CA), terminate (TRM), continue (CON), message error (MER), and break connection (BC). Control byte commands issued by a peripheral adapter during a message sequence include, send information (SI), literal appended (LA), data appended (DA), status appended (SA), message error (MER), wait (WT), and break (BRK).

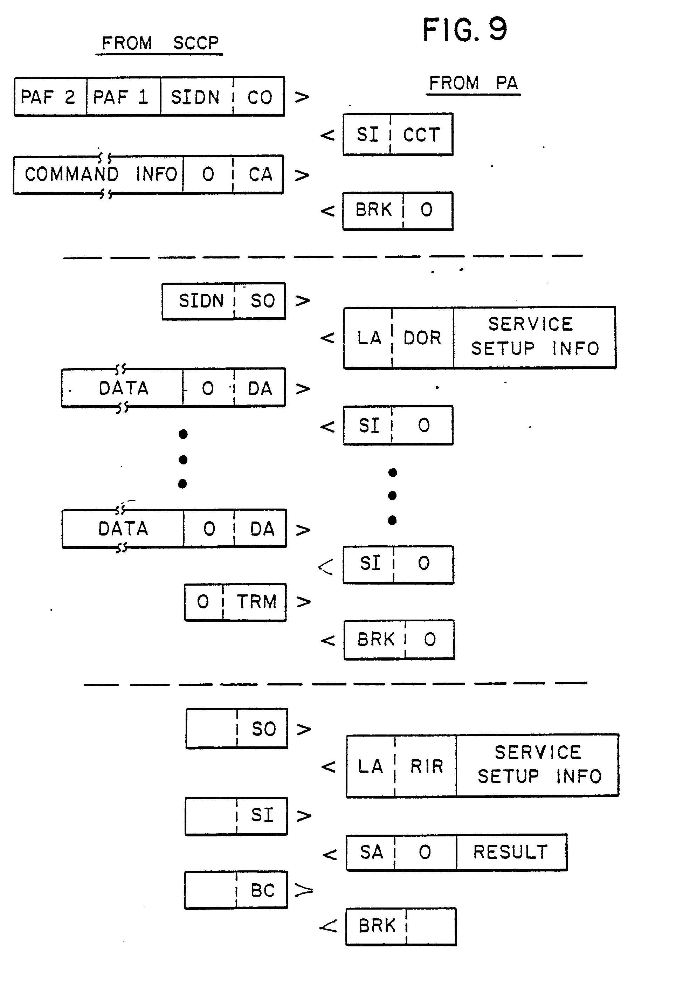

A typical output (from the central system) sequence will now be described. Referring to Fig. 9, the complete output sequence is shown.

The discussion begins with the operations of an SCCP 20. (Recall that a PE 22 causes an SCCP 20 to start with the CIOF message after having set up central memory 10). The SCCP 20 connects to the proper BSC 32 as specified in the PAF (peripheral address field) and sends a command offer message to a PA 40 along with 2 bytes of control information contained in the PAFs, the CO message being defined as a 3 byte message. The modifier SIDN is a source identifier. The PA 40 responds with a send information message, the modifier CCT of the control byte indicating a control/command count. This response indicates additional command bytes are required. The SCCP 20 sends the addition control information to the PA 40 via the command appended message, the zero modifier (sometimes denoted NULL) indicating the modifier is not used. The PA 40 accepts and stores the control information and returns a break message terminating this part of the transmission. The SCCP 20 breaks the BSC 32 connection and continues to scan for Service Needed messages. Any SCCP 20 which next determines while scanning BSCs 32 that a PA 40 requires service will connect to the proper BSC 32 and start a new message sequence with a Service Offer message, containing the source ID modifier. The PA 40 responds with a literal appended message, indicating it is ready to accept the data by the data output ready modifier (DOR), and containing service setup information required by the SCCP 20. The service setup information is the memory address of IOF, which indicates the address of CM in which the data is to be stored, denoted as "L" field, and the peripheral identifier, which permits verification by the SCCP 20 that the proper IOF fields are being utilized for the peripheral device, denoted as check field or "C" field. The transfer to the L field and C field in the literal appended message by the peripheral adapter 40 allows any SCCP 20 to service the PA 40. The data appended-send information message exchanges continue until all the data has been outputted. The SCCP 20 then ends the sequence with a terminate message, the PA 40 responding with a break (BRK), thereby releasing the SCCP 20. When a BRK message is received, the SCCP 20 updates the IOF Final Byte Count to contain the number of bytes transmitted thus far, thereby providing the necessary information to calculate the next available memory address if the total data transfer has not been completed.

The SCCPs continue an interrogation, the SCCP 20 determining an incomplete transfer connects to a BSC 32. The SO message transferred out is responded to by an LA message with the result input ready (RIR) modifier and any service setup information. The SCCP 20 sends an SI message which is responded to by a status appended (SA) message with the result (or status) which may be a status register of the peripheral indicating the results of the transferred data. The SCCP 20 then sends the break connection message and the PA 40 responds with a break, thereby releasing the SCCP 20, completing the data output transfer.

For a peripheral to input data to the central system, the peripheral must first be "enabled" by a PE 22. The PE 22 must set aside an IOF area in central memory and cause a command offer sequence to take place. The relevant PA 40 stores the necessary control information (e.g., memory address of IOF in which the address for data is to be stored) and can pass this information to the SCCP 20 which will subsequently service the PA 40, thereby allowing any SCCP 20 to service the PA 40.

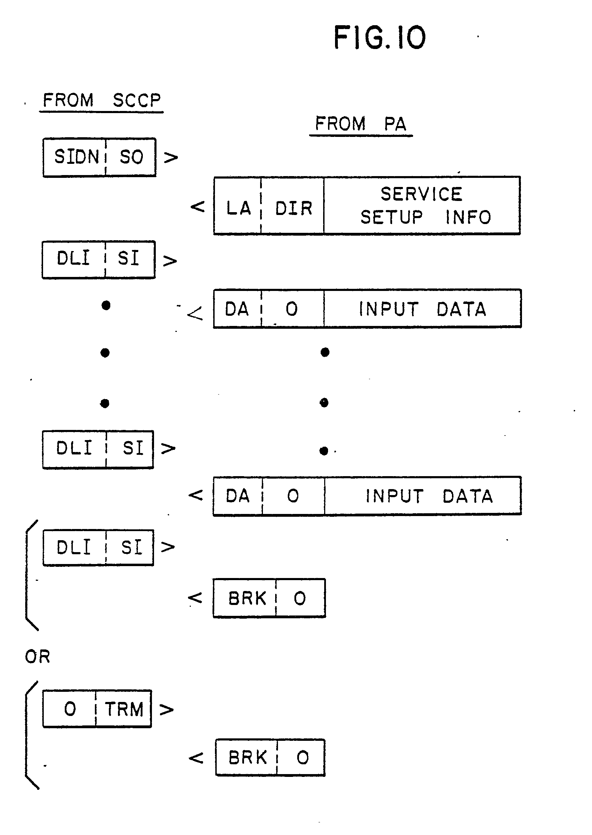

When a peripheral desires to communicate with the central memory 10, the peripheral causes the PA 40 to raise the Service Needed signal. The first SCCP 20 to detect the Service Needed signal (or flag) connects to the relevant BSC 32 and initiates the service offer sequence as shown in Fig. 10. Referring to Fig. 10, the SCCP 20 sends the service offer message. The PA 40 responds with a literal appended message with a data input ready (DIR) modifier. The message also contains information which the SCCP will need to communicate with central memory 10, such as the IOF address. The SCCP 20, then transfers a send information message, the mofifier DLI specifying the maximum number of appended bytes the central system can accept in a message from the PA 40. The PA sends the data appended message with the input data, the SI/DA message exchange continuing until the transfer is terminated. The transfer can typically be terminated in one of two ways. The first way shown in Fig. 10, the termination is by the PA by sending a break response to a SI message. The second way the termination is ended is initiated by the central system sending a terminate message with a break response from the PA 40. The status sequence can then take place as in the data output case described above to complete the transfer.

E. MPM operation

The operation of the MPM 402 is achieved by the execution of the microinstructions stored in the ROM of the sequence controller 410. The execution of the microinstructions, which serve to configure the ROM of sequence controller 410, implement the functions of the defined message protocol performed by the PA 40 as described above.

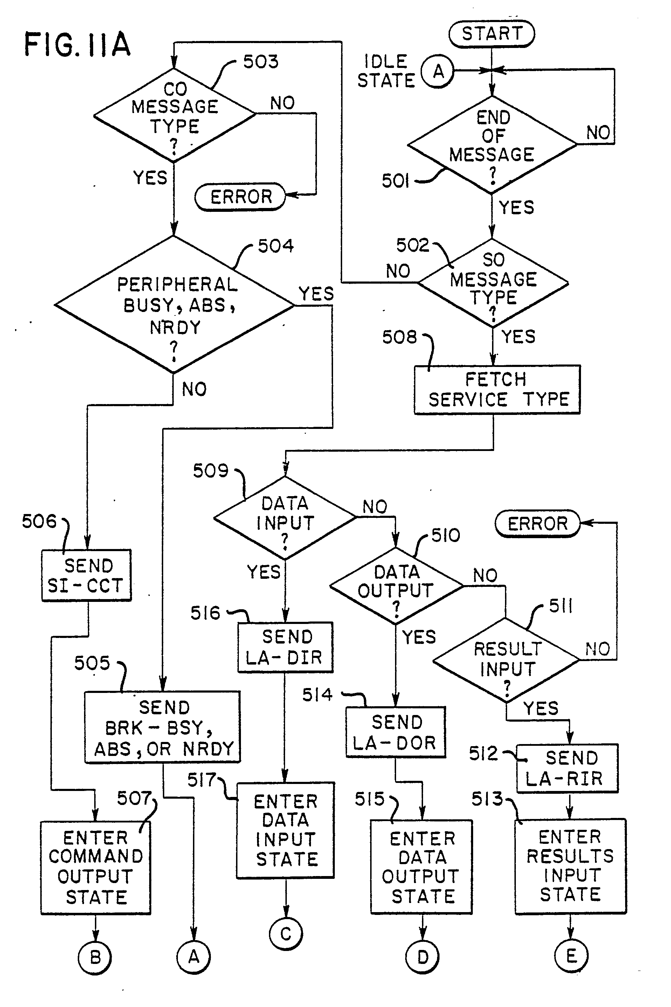

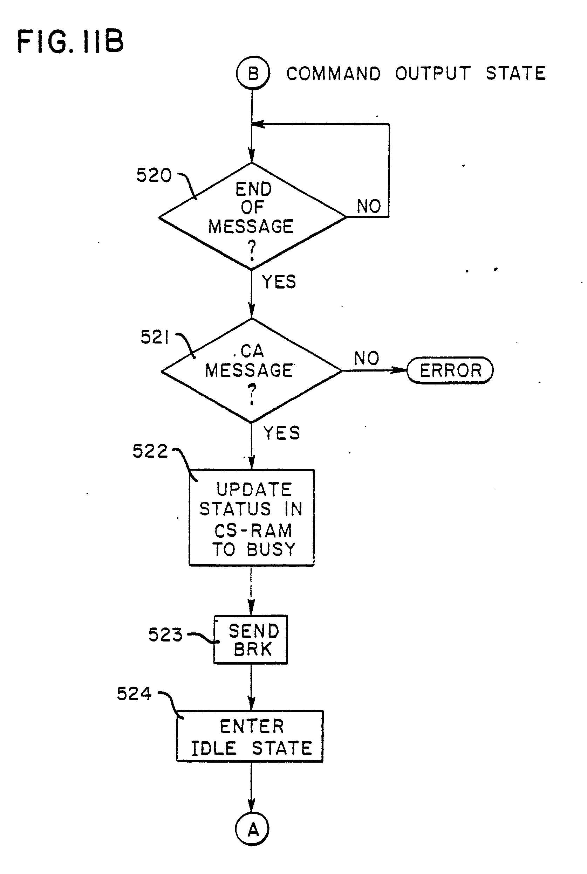

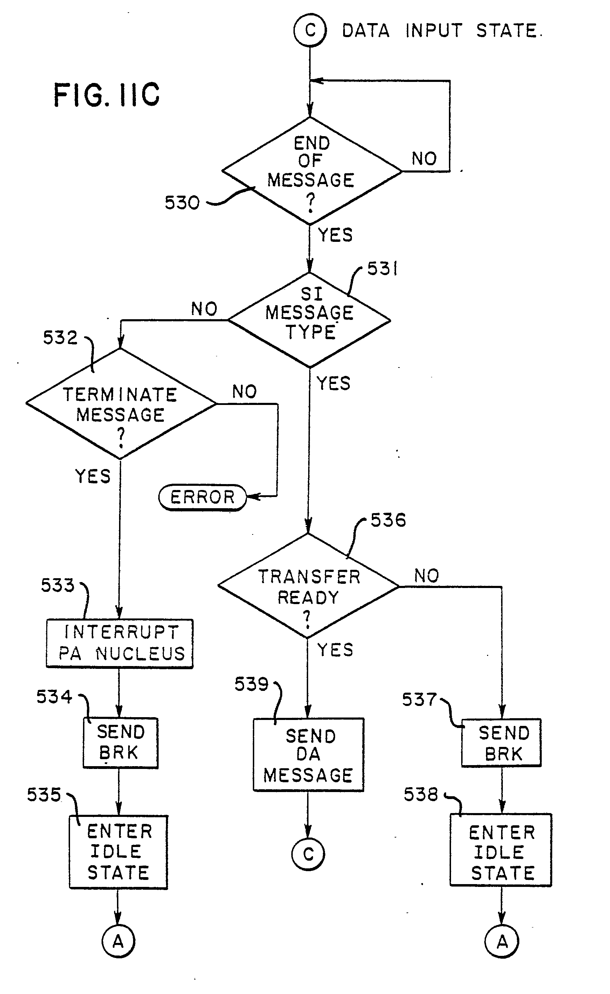

The MPM 402 has five defined states, the idle state, the command output state, the data input state, the data output state, and the result input state, denoted herein as state A, state B, state C, state D, and state E respectively. Referring to Fig. 11A through 11E, the flow diagrams depicting typical transmission sequences of each of the five states are shown. In the normal transfer of information as defined by the message protocol, each MPM state is expecting one of a particular message type in order to perform an orderly completion of the transfer sequence. If one of the expected message types is not received, an error condition exists. Each state performs a response or a plurality of responses with an SCCP 20 corresponding to the current state of MPM 402. In each state, the MPM 402 waits for the input message from the SCCP 20 to complete, determines the message type from the control byte, and responds accordingly. This structure is due primarily to the message-response exchange of the defined message protocol described above in which a PA 40 is essentially slave to the SCCP 20.

Fig. 11A shows the flow diagram for the idle state. When a PA 40 is powered, the normal equipment initialization occurs and the MPM 402 starts operation by entering the idle state in a loop waiting for the end of message signal from LCM 401 (block 501). When the end of message signal is detected, the control byte is checked to determine if the message is a service offer (SO) message (block 502). If the message is not an SO message, a check is performed to determine if the message is a command offer (CO) message (block 503). If the message is not a CO message, an error condition is present and error procedures are entered. If the message is a CO message (block 503), the MPM determines if the peripheral is busy, absent or not ready (block 504) by checking the appropriate status flag in CS-RAM 420. If the peripheral is busy, absent, or not ready, the MPM 402 causes the PA 40 to respond with a break message BRK, with a busy modifier BSY, an absent modifier ABS, or a not ready modifier NRDY (block 505), to an SCCP 20. If the peripheral is not busy (block 504), the MPM 402 causes the PA 40 to resond with a send information message having a control/command count modifier, SI-CCT (block 506), to the SCCP 20 indicating the number of PAFs to be transmitted, and then enters the command output state (block 507).

If the message is determined to be an SO message (block 502), the MPM 402 determines the service type (block 508) by fetching information in CS-RAM 420 set up by the PA nucleus 403. The information is utilized to determine if the service type is data input (block 509). If the service type is not data input, a check is made for a data output service type (block 510). If the service type is not data output, a check is made for a result input service type (block 511). If the service type is not results input an error condition exists and error recovery procedures are entered. If the service type is results input, the MPM 402 cause a PA 40 to respond with a literal appended message with a results input ready modifier, LA-RIR (block 512), to an SCCP 20. The LA-RIR message also contains literal information, i.e. information which the SCCP 20 will need to communicate with central memory 10, which is stored in CS-RAM 420. The MPM 402 then enters the results input state (block 513). If the service type is determined to be data output (block 510), the MPM 402 causes an PA 40 to

respond with a literal appended message and a data output ready modifier, LA-DOR (block 514) to the SCCP 20, the message also containing literal information obtained from CS-RAM 420. The MPM 402 then enters the data output state (block 515). If the service type is determined to be data input (block 509), the MPM 402 causes the PA 40 to respond to an SCCP 20 with a literal appended message, the modifier being data input ready, LA-DIR (block 516), along with the literal information from CS-RAM 420. The MPM 402 then enters the data input state (block 517).

The flow diagram of the command output state is shown in Fig. 11B. The MPM 402 waits for the command appended message, CA (block 520), from an SCCP 20 by continuously checking the end of message signal from LCM 401. When the end of message signal is detected, the message type is checked (block 521). If the message type is not CA, an error condition exists and error recovery procedures are entered. If the message type is CA, the command bytes appended to the control byte are stored in the allocated locations of CS-RAM 420, and the status of the peripheral is updated to BUSY (block 522). The MPM 402 responds to the SCCP 20 by transmitting a break message, BRK (block 523), and enters the idle state (block 524) completing the initial transmission sequence.

The flow diagram of the data input state is shown in Fig. 11C. The MPM 402 waits for a message from an SCCP 20 to complete by continuously checking the end of message signal (block 530). When the end of message signal is detected, the MPM 402 checks to determine if the message type (block 531) is send information, SI. If the message type is not SI, a check is made to determine if the mesage type is terminate, TRM (block 532). If the message type is not TRM, an error condition exists and error recovery procedures are entered. If the message type is TRM, the SCCP 20 is indicating no more data is to be inputted and is terminating the sequence. The MPM 402 interrupts the PA nucleus 403 (block 533) indicating to the peripheral that the transfer of data is properly completed. The MPM 402 causes the PA 40 to respond to the SCCP 20 with a break message, BRK (block 534), and then returns to the idle state (block 535). If the message type is determined to be SI (block 531), the MPM 402 checks to determine if the PA nucleus is ready for transferring data by testing a READY control signal at the MPM 402-PA nucleus 403 interface (block 536). If the READY control signal is not present, the MPM 402 causes the PA 40 to transmit a BRK response (block 537) to SCCP 20 and then enters the idle state (block 538). If the READY control signal is present (block 536), the MPM 402 causes the data appended message to be transmitted to SCCP 20 (block 539). The MPM 402 remains in the data input state, returning to checking for the end of message signal from LCM 401 (block 530). In this manner, the SI/DA message-response sequence continues until all the data is inputted.

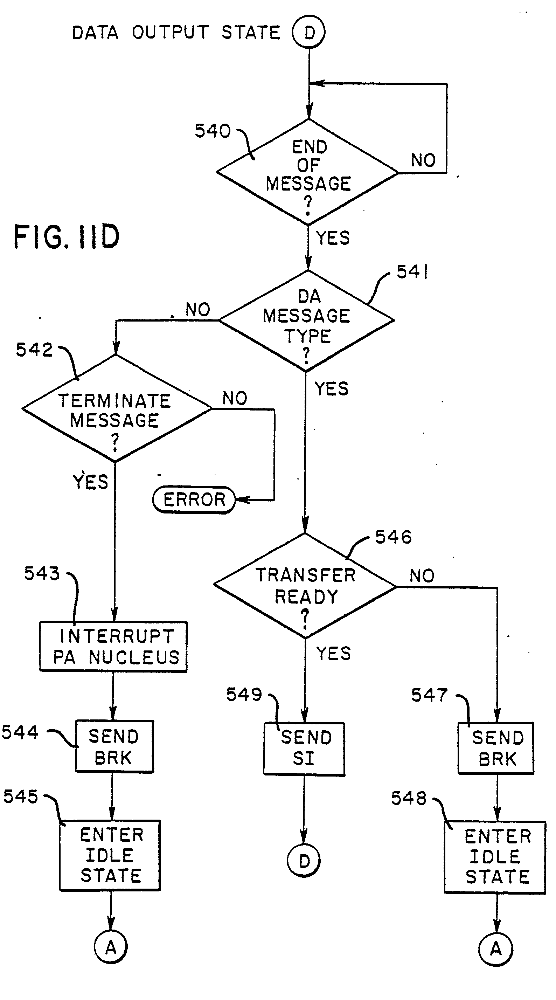

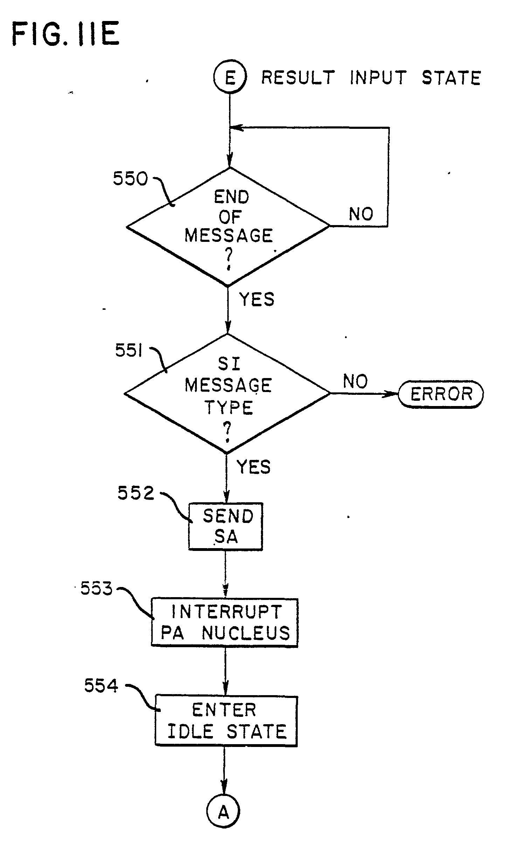

The flow diagram of the data output state is shown in Fig. 11D. The MPM 402 waits for a message from an SCCP 20 to complete by continuously checking the end of message signal (block 540). When the end of message signal is detected, the MPM 402 checks to determine if the message type (block 541) is data appended, DA. If the message type is not DA, a check is made to determine if the message type is terminate, TRM (block 542). If the message type is not TRM, an error condition exists and error recovery procedures are entered. If the message type is TRM, the SCCP 20 is indicating no more data is to be outputted and is terminating the sequence. The MPM 402 interrupts the PA nucleus 403 (block 543) indicating to the peripheral that the transfer of data is properly completed. The MPM 402 causes the PA 40 to respond to the SCCP 20 with a break message, BRK (block 544), and then returns to the idle state (block 545). If the message type is determined to be DA (block 541), the MPM 402 checks to determine if the PA nucleus 403 is ready for receiving data by testing the READY control signal at the MPM 402-PA nucleus 403 interface (block 546). If the READY control signal is not present, the MPM 402 causes the PA 40 to transmit a BRK response (block 547) to SCCP 20 and then enters the idle state (block 548). If the READY control signal is present (block 546), the MPM 402 causes the send information message to be transmitted to SCCP 20 (block 549). The MPM 402 remains in the data output state, returning to checking for the end of message signal from LCM 401 (block 540). In this manner, the DA/SI message-response sequence continues until all the data is outputted.

The flow diagram of the result input state is shown in Fig. 11E. The MPM 402 waits for the send information message, SI (block 550), from an SCCP 20 by continuously checking the end of message signal from LCM 401. When the end of message signal is detected, the message type is checked (block 551). If the message type is not SI, an error condition exists and error recovery procedures are entered. If the message type is SI, the MPM 402 causes the PA 40 to transmit a status appended message, SA (block 552) to the SCCP 20 with the result information appended to the control byte. The MPM 402 interrupts the PA nucleus 403 (block 553) indicating to the peripheral that the status transfer sequence is properly completed, and then enters the idle state (block 554).

**Claims**

1. A data processing system having at least one processing element (22), a central memory (10) coupled to said processing element (22), and an I/O processor (23) coupled to said central memory (10), and wherein said I/O processor (23) has channel port means (32) for providing transmission paths for communicating information to a plurality n of peripheral subsystems (30), and wherein each of said peripheral subsystems (30) has included a peripheral adapter (40) interfacing with a plurality of peripheral devices (41), charac-

terized in that said I/O processor (23) has a plurality m of serial channel control processors (20), where n is greater than m, and dynamic channel exchange means (31) which includes a plurality n of bit serial channel ports (32) for providing a transmission path in a bit serial link format to each of said peripheral subsystems (30) and which allows a said serial channel control processor (20) to communicate with any one of the peripheral adapters (40), and in that each said peripheral adapter comprises first means (401) having an input adapted to receive information from said I/O processor (23) and having an output adapted to transmit infmation to said I/O processor (23), for performing a serial-to-parallel or parallel-to-serial transformation on the information from said I/O processor (23) or to said I/O processor (23), respectively, second means (403), having a plurality of input-output terminals adapted to interface with said peripheral devices (41), for providing peripheral controller logic functions for controlling said peripheral devices (41), and for the transfer of information with said peripheral devices (41), and third means (402), operatively connected to said first means and to said second means, for generating response transmissions to said I/O processor (23) in accordance with a defined message protocol, in conjunction with controlling the transfer of information between said first means (401) and said second means (403).

2. A data processing system according to claim 1, wherein said third means (402) is characterized by: memory means (420, 450) for providing temporary storage of command and control information; coupling means (430, 440), operatively connected to said memory means (420, 450), for providing interface logic between said first (401) and said second means (403); and controller means (410), operatively connected to said memory means (420, 450) and to said coupling means (430, 440), having a control store configured to store a plurality of routines for implementing a defined message protocol, said control store causing the generation of control signals thereby controlling said memory means (420, 450) and said coupling means (430, 440), and further causing the generation of response transmission to said I/O processor (23) in conjunction with the controlling of said memory means (420, 450) and said coupling means (430, 440) in accordance with said defined message protocol.

**Patentansprüche**

1. Datenverarbeitungssystem mit zumindest einem Verarbeitungselement (22), einem mit dem Verarbeitungselement (22) gekoppelten Zentralspeicher (10) und einem mit dem Zentralspeicher (10) gekoppelten I/O-Prozessor (23), und wobei der I/O-Prozessor (23) eine Kanalanschlußvorrichtung (32) zur Bildung von Übertragungswegen für eine Informationskommunikation mit einer Vielzahl n von peripheren Subsystemen (30) aufweist, und wobei jedes der peripheren Subsysteme (30) einen peripheren Adapter (40) enthält, der mit einer Vielzahl von peripheren Einrichtungen (41) Schnittstellen bildet, dadurch gekennzeichnet, daß der I/O-Prozessor (23) eine Vielzahl m von seriellen Kanalsteuerprozessoren (20) aufweist, wobei n größer m ist, und eine dynamische Kanalwählervorrichtung (31), die eine Vielzahl n bitserieller Kanalanschlüsse (32) zur Bildung eines Übertragungsweges in einem bitseriellen Verbindungsformat zu jedem der peripheren Subsystem (30) aufweist und es einem seriellen Kanalsteuerprozessor (20) ermöglicht, mit irgendeinem der peripheren Adapter (40) in Kommunikation zu treten, und daß jeder periphere Adapter eine erste Vorrichtung (410) mit einem ersten Eingang besitzt, der geeignet ist, Informationen von dem I/O-Prozessor (23) zu empfangen, und eine Ausgang, der geeignet ist, Information zu dem I/O-Prozessor (23) zu senden für die Durchführung einer seriell-zu-parallel- oder parallel-zuseriell-Transformation bezüglich der Information von dem I/O-Prozessor (23) bzw. zum I/O-Prozessor (23), eine zweite Vorrichtung (403) mit einer Vielzahl von Eingangs/Ausgangs-Anschlüssen, die geeignet sind, mit den peripheren Einrichtungen (41) zur Durchführung von peripheren Steuerungslogikfunktionen zum Steuern der peripheren Einrichtungen (41) und zur Übertragung von Information mit den peripheren Einrichtungen (41) Schnittstellen zu bilden, und eine dritte Vorrichtung (402), die betriebsmäßig mit der ersten Vorrichtung und der zweiten Vorrichtung verbunden ist zum Erzeugen von Antwortübertragungen zu dem I/O-Prozessor (23) gemäß einem definierten Nachrichtenprotokoll, in Verbindung mit der Steuerung der Übertragung von Information zwischen der ersten Vorrichtung (401) und der zweiten Vorrichtung (403).

2. Datenverarbeitungssystem nach Anspruch 1, wobei die dritte Vorrichtung (402) gekennzeichnet ist durch: Speichervorrichtungen (420, 450) für eine zeitweilige Speicherung von Befehls- und Steuerinformation; Kopplungsvorrichtungen (430, 440), die betriebsmäßig mit den Speichervorrichtungen (420, 450) zur Schnittstellenlogikbildung zwischen der ersten Vorrichtung (401) und der zweiten Vorrichtung (403) gekoppelt sind; und eine Steuerungsvorrichtung (410), die betriebsmäßig mit den Speichervorrichtung (440, 450) und den Kopplungsvorrichtungen (430, 440) verbunden ist und einen Steuerspeicher besitzt, der zur Speicherung einer Vielzahl von Routinen zur Durchführung eines definierten Nachrichtenprotokolls konfiguiert ist, wobei der Steuerspeicher die Erzeugung von Steuersignalen unter Steuerung der Speichervorrichtungen (420, 450) und der Kopplungsvorrichtungen (430, 440) bewirkt, und ferner die Erzeugung von Antwortübertragungen zu dem I/O-Prozessor (23) in Verbindung mit der Steuerung der Speichervorrichtungen (420, 450) und der Kopplungsvorrichtungen (430, 440) gemäß dem definierten Nachrichtenprotokoll bewirkt.

**Revendications**

1. Système de traitement de données ayant au moins un élément de traitement (22), une mémoire centrale (10) connectée audit élément de traitement (22), et un processeur d'entrée/sortie (23) connecté à ladite mémoire centrale (10) et dans lequel ledit processeur d'entrée/sortie (23) possède un accès de canal (32) pour établir des trajets de transmission afin de communiquer des informations à un groupe n de sous-ensembles périphériques (30), et dans lequel chacun desdits sous-ensembles périphériques (30) comprend un adaptateur périphérique (40) en interconnexion avec plusieurs dispositifs périphériques (41), caractérisé en ce que ledit processeur d'entrée/sortie (23) comporte un groupe m de processeurs (20) de commande de canaux en série, où n est plus grand que m, et des moyens d'échange de canaux dynamiques (31) qui comprennent un groupe n d'accès de canaux à bits série (32) pour établir un trajet de transmission dans un format de liaison à bits série vers chacun desdits sous-ensembles périphériques (30) et qui permettant audit processeur (20) de commande de canal série de communiquer avec l'un quelconque des adaptateurs périphériques (40), et en ce que chacun desdits adaptateurs périphériques comprend un premier moyen (401) ayant une entrée conçue pour recevoir une information dudit processeur d'entrée/sortie (23) et ayant une sortie conçue pour transmettre une information audit processeur d'entrée/sortie (23), afin d'effectuer une transformation série/parallèle ou parallèle/série sur l'information provenant dudit processeur d'entrée/sortie (23) ou transmise audit processeur d'entrée/sortie (23), respectivement, un deuxième moyen (403) ayant plusieurs bornes d'entrée-sortie conçues pour être interconnectées avec lesdits dispositifs périphériques (41), afin d'effectuer des fonctions logiques de contrôleur périphérique pour contrôler lesdits dispositifs périphériques (41), et d'effectuer le transfert de l'information avec lesdits dispositifs périphériques (41), et un troisième moyen (402) connecté fonctionnellement audit premier moyen et audit deuxième moyen, pour générer des transmissions de réponse audit processeur d'entrée/sortie (23) conformément à un protocole de message défini, conjointement à un contrôle du transfert de l'information entre ledit premier moyen (401) et ledit deuxième moyen (403).

2. Système de traitement de données selon la revendication 1, dans lequel ledit troisième moyen (402) est caractérisé par: les moyens de mémoire (420, 450) pour le stockage temporaire d'informations de commande et de contrôle; les moyens de connexion (430, 440) connectés fonctionnellement auxdits moyens de mémoire (420, 450) pour établir une logique d'interface entre ledit premier moyen (401) et ledit deuxième moyen (403); et des moyens contrôleurs (410) connectés fonctionnellement auxdits moyens de mémoire (420, 450) et auxdits moyens de connexion (430, 440), comportant une mémoire de commande organisée pour stocker plusieurs programmes destinés à l'établissement d'un protocole de message déterminé, ladite mémoire de commande provoquant la génération de signaux de commande afin de commander lesdits moyens de mémoire (420, 450) et lesdits moyens de connexion (430, 440), et provoquant en outre la génération de transmissions de réponse audit processeur d'entrée/sortie (23) conjointement à la commande desdits moyens de mémoire (420, 450) et desdits moyens de connexion (430, 440) conformément audit protocole de message déterminé.

FIG. 1

## FIG. 2

| | |
|---|---|
| N - X | C FIELD |
| | PERIPHERAL ADDRESS FIELD (PAF1) |
| | PERIPHERAL ADDRESS FIELD (PAF2) |
| | ⋮ |
| LOCATION N | PERIPHERAL ADDRESS FIELD X(PAFX) |
| N + 1 | STARTING MEMORY ADDRESS |
| N + 2 | TOTAL BYTE COUNT |
| N + 3 | STATUS |
| N + 4 | FINAL BYTE COUNT |
| N + 5 | |
| N + 6 | |

10

# FIG. 3

CENTRAL MEMORY (10)

PE (22)

INTERNAL TRANSFER BUS (24)

SCCP 0 (20) | SCCP 1 | SCCP 2 (20) | SCCP M-1

21

0 (34) | 1 | 2 (34) | M-1

35

SWITCHING LOGIC

32 | 0 | 1 | 2 | 3 | 4 | 5 | 6 | 7 | N-1 | 32
32 | 32

31

PS (30) | PS (30) | PS | PS (30) | PS | PS (30)

EP 0 055 741 B1

TO I/O PROCESSOR

31

40

LCM — 401

MPM — 402

403

PA NUCLEUS

PERIPHERAL — 41

FIG. 4

FIG. 5

TO PA NUCLEUS

402

TO LCM

410 — SEQUENCE CONTROLLER

450 — CS-RAM CONTROL LOGIC

420 — CS-RAM

440 — LCM INTERFACE LOGIC

430 — SERVICE INFORMATION CONTROL INTERFACE

4

## FIG. 6A

PROCESS INITIATE I/O — 600

601 — PE LOADS IOF & DATA IN CM

PROCESS TERMINATE I/O

TIME-OUT OR INTERRUPT → POST STATUS — 610

PE SENDS CHECK IOF MESSAGE TO SCCP → CONT
605

PE 22

SCCP 20

INTERROGATE FOR CIOF OR SN — 620

625 — DETERMINE REQUEST

SN

CIOF → FETCH IOFS FROM CM — 630

655 — INDICATE TO PA THAT SCCP IS READY

SEND INITIATING COMMAND TO PA
635

POST STATUS INFO IN CM — 650

640 — COMMAND RECEIVED ? — NO

YES

645 — TRANSFER INFO BETWEEN CM & PA

5

PA 40

TRANSFER INFO
BETWEEN CM & PA
660

YES

665 IS
SCCP
READY
?

NO

SEND
SN 670

YES

675 IS
PA
ENABLED
?

NO

PER

690 INITIATED
BY
?

SCCP

END OF
TRANSFER
OR ABORT

685

YES

680 COMM
DESIRED
?

NO

PERIPHERAL 41

FIG.6B

PERIPHERAL
DESIRES TO
COMMUNICATE
TO CM 695

6

# FIG. 6C

FIG.6A

FIG.6B

# FIG. 7

FROM SCCP

SEQUENCE STARTING MESSAGE

MESSAGE 1

MESSAGE 2

•
•
•

MESSAGE N

SEQUENCE ENDING MESSAGE

FROM PA

RESPONSE X

RESPONSE 1

RESPONSE 2

•
•
•

RESPONSE N

RESPONSE Y

# FIG. 8

A.

| | | | CONTROL BYTE |
|---|---|---|---|

```
   1      8|1        8|1      8|1    4|5    8|
  ┌──────┬──┬─────────┬────────┬──────┬──────┐     (TO PA)
A.│BYTE N│  │         │ BYTE 1 │ MOD  │ COMM │   ──────────▶
  └──────┴──┴─────────┴────────┴──────┴──────┘
```

INFORMATION BYTES
(IF PRESENT)

CONTROL
BYTE

```
   8              1|8        1|8      1|8          1
  ┌──────┬────────┬──────────┬──────   ──┬───────────┐
B.│ COMM │  MOD   │  BYTE 1  │            │  BYTE N   │
  └──────┴────────┴──────────┴──────   ──┴───────────┘
(TO
 SCCP)
```

INFORMATION BYTES
(IF PRESENT)

## FIG. 9

FROM SCCP

FROM PA

| PAF 2 | PAF 1 | SIDN | CO | >

< | SI | CCT |

| COMMAND INFO | O | CA | >

< | BRK | O |

---

| SIDN | SO | >

< | LA | DOR | SERVICE SETUP INFO |

| DATA | O | DA | >

< | SI | O |

•
•
•

•
•
•

| DATA | O | DA | >

< | SI | O |

| O | TRM | >

< | BRK | O |

---

| SO | >

< | LA | RIR | SERVICE SETUP INFO |

| SI | >

< | SA | O | RESULT |

| BC | >

< | BRK |

# FIG. 10

FROM SCCP

FROM PA

| SIDN | SO | >

< | LA | DIR | SERVICE SETUP INFO |

| DLI | SI | >

• ·< | DA | 0 | INPUT DATA |

•    •

•    •

| DLI | SI | >    •·

< | DA | 0 | INPUT DATA |

| DLI | SI | >

< | BRK | 0 |

OR

| 0 | TRM | >

< | BRK | 0 |

# FIG. 11A

START

IDLE STATE  (A)

END OF MESSAGE ? — 501

NO

YES

SO MESSAGE TYPE ? — 502

NO

YES

FETCH SERVICE TYPE — 508

CO MESSAGE TYPE ? — 503

NO

YES

ERROR

PERIPHERAL BUSY, ABS, NRDY ? — 504

YES

NO

DATA INPUT ? — 509

NO

YES

DATA OUTPUT ? — 510

NO

YES

ERROR

RESULT INPUT ? — 511

NO

YES

SEND SI-CCT — 506

SEND LA-DIR — 516

SEND LA-DOR — 514

SEND LA-RIR — 512

SEND BRK-BSY, ABS, OR NRDY — 505

ENTER COMMAND OUTPUT STATE — 507

ENTER DATA INPUT STATE — 517

ENTER DATA OUTPUT STATE — 515

ENTER RESULTS INPUT STATE — 513

(B)

(A)

(C)

(D)

(E)

## FIG. IIB

(B) COMMAND OUTPUT STATE

520 — END OF MESSAGE ? — NO

YES

521 — .CA MESSAGE ? — NO → ( ERROR )

YES

522 — UPDATE STATUS IN CS-RAM TO BUSY

523 — SEND BRK

524 — ENTER IDLE STATE

(A)

**FIG. IIC**

(C) DATA INPUT STATE.

530 — END OF MESSAGE ? — NO

YES

531 — SI MESSAGE TYPE

NO — 532 TERMINATE MESSAGE ? — NO → ERROR

YES

533 — INTERRUPT PA NUCLEUS

534 — SEND BRK

535 — ENTER IDLE STATE → (A)

YES — 536 TRANSFER READY ? — NO

YES

539 — SEND DA MESSAGE → (C)

537 — SEND BRK

538 — ENTER IDLE STATE → (A)

DATA OUTPUT STATE (D)

FIG. IID

# FIG. IIE

(E) RESULT INPUT STATE

550 — END OF MESSAGE ? — NO

YES

551 — SI MESSAGE TYPE ? — NO → ( ERROR )

YES

552 — SEND SA

553 — INTERRUPT PA NUCLEUS

554 — ENTER IDLE STATE

(A)